# EUROPÄISCHE PATENTSCHRIFT

(11) **EP 2 881 617 B1**
(45) Veröffentlichungstag und Bekanntmachung des Hinweises auf die Patenterteilung: **03.05.2017**
(21) Anmeldenummer: 14193770.6
(22) Anmeldetag: 19.11.2014
(51) Int. Cl.: F16G 3/10

(54) **Methode zur Herstellung eines endlosen Transportbandes**
Method for producing an endless transport belt
Procédé de fabrication d'une bande de transport sans fin

(30) Priorität: 20.11.2013 DE 102013112837
(43) Veröffentlichungstag der Anmeldung: 10.06.2015
(73) Patentinhaber: manroland web systems GmbH, 86153 Augsburg (DE)
(72) Erfinder: Albrecht, Stefan, 86356 Neusäß (DE); Rothenberger, Norbert, 86154 Augsburg (DE); Bachmeir, Xaver, 86444 Affing (DE); Fischer, Stephan, 86316 Friedberg (DE); Jirous, Marek, 86456 Gablingen (DE); Stuhlmiller, Helmut, 86450 Altenmünster (DE)

(56) Entgegenhaltungen:
- WO-A1-2007/082994
- US-A- 5 670 230

## Beschreibung

Die Erfindung bezieht sich auf ein Verfahren zur Herstellung eines endlosen Transportbandes zum Führen von Substraten während des Druckvorganges einer Druckmaschine, wobei die Enden eines Transportbandes verschweißt werden.

Solche Endlosbänder sind seit längerer Zeit bekannt, um flächige Warenbahnen, insbesondere solche aus einem kritischen Material, z. B. solche mit hoher Neigung zu Verzug, sicher durch eine Maschine, beispielsweise eine Druckmaschine, zu führen. Solche Bänder werden beispielsweise in der WO 82/00975, der DE 10023689 oder der DE 8915358 offenbart. Sie bestehen meistens aus einem mehrlagigen Aufbau, bei dem eine textile Gewebelage die Spannkräfte aufnimmt und bei dem eine Deckschicht so ausgebildet ist, dass diese mit einem Adhäsiv beschichtet werden kann, das die Verbindung zwischen Band und Substrat herstellt. Heutige Endlosbänder bestehen meist aus einem Polyurethan, das sich für diese Zwecke besonders gut eignet. Es ist zudem schmelzbar, was das Verschweißen der beiden Enden des Bandes in der Maschine zu einem endlosen Band ermöglicht. Dazu werden beide Enden ohne Zugabe von Kleber allein mittels Hitze und Druck zu einem endlosen Transportband verschmolzen.

Es ist seit langem bekannt, dass die Verbindungsstelle besser haltbar ist, wenn die beiden Enden keilzinkenförmig ineinandergreifend ausgebildet sind. Durch ein "Verzahnen" der Fügestellen werden die im Betrieb auftretenden Spannungen nämlich auf einen größeren Bereich verteilt. Alternativ wird in der DE 10 2010 000855 ein Kurvenverlauf offenbart, mit dem ein weiterer Spannungsabbau erzielt werden kann. Um den Einflussbereich der Fügestelle auf einen größeren Bandbereich auszudehnen und so zu mitteln, wird in der DE 9000706 ferner vorgeschlagen, die Position der Zinken über die Breite des Bandes veränderlich zu gestalten. Alle diese Maßnahmen zur Spannungsminderung führen jedoch zu einer erheblichen Verlängerung der notwendigen Schweißnaht.

Zum Verschweißen der beiden Enden eines Transportbands kommen Heißpressen zum Einsatz, welche eine obere und eine untere Heizplatte aufweisen, mit denen Temperaturen von ca. 160 °C erreicht werden. Eine solche Presse wird beispielsweise in der DE 7619756 offenbart.

Es ist bekannt, dass beim Verschweißen die stoffschlüssige Verbindung der beiden Enden des Transportbands durch Material der Deckplatte erzeugt wird, das unter dem Einfluss von Hitze und Druck zwischen die textilen Fasern der kraftübertragenden Gewebelage gepresst wird. Dabei tritt in der Deckplatte ein Materialschwund auf, dessen Ausprägung abhängig von der Temperatur, von der Pressung und von der Länge der Schweißnaht ist. Je länger die Nahtstelle, desto mehr Material wird für die Verbindung der Gewebelage benötigt.

Aus dem Materialschwund der Deckplatte resultiert eine etwas geringere Banddicke, welche sich bei bestimmten Druckverfahren, wie z.B. dem Offsetverfahren, dem Tiefdruckverfahren oder dem Flexodruckverfahren, durch eine geringere Farbübertragung bemerkbar macht. Die im Bereich der Nahtstelle gedruckten Exemplare weisen daher eine geringere Farbdichte auf, was die Qualität der gedruckten Exemplare schmälert.

Ein Verfahren zur Herstellung eines endlosen Transportbandes zum Führen von Substraten während des Druckvorganges einer Druckmaschine ist aus den Druckschriften US 5,670,230 A und WO 2007/082994 A1 bekannt.

Der Erfindung liegt daher die Aufgabe zugrunde, ein Verfahren zur Herstellung eines endlosen Transportbandes anzugeben, das den Mangel des Dickenunterschieds und des Pressungsverlusts durch den Schweißvorgang auf möglichst einfache Art und Weise behebt.

Diese Aufgabe wird erfindungsgemäß gelöst, indem das Transportband nach einem oder mehreren Schweißvorgängen auf eine Nenndicke geschliffen wird, die kleiner als oder gleich der minimalen Dicke des Transportbandes ist.

Die Erfindung geht von der Überlegung aus, dass für eine möglichst hohe und auch gleichmäßige Druckqualität Unterschiede in der Dicke des Transportbandes vermieden werden sollten und somit insbesondere die Senke im Bereich der Schweißnaht ausgeglichen werden sollte. Dabei wurde erkannt, dass das Transportband auch im Bereich der Senke eine für die Anforderungen ausreichende Dicke hat. Zusätzlich wurde festgestellt, dass das Material üblicher Transportbänder mittels einer Schleifvorrichtung abgetragen werden kann. Für eine möglichst einheitliche Dicke des Transportbandes wird daher das Transportband nach Beendigung der Schweißvorgänge auf eine Nenndicke geschliffen wird, die kleiner als oder gleich der minimalen Dicke des Transportbandes ist.

Sollte die Senke nach dem Schweißvorgang zu tief sein, müsste also zu viel Material durch den Schweißvorgang abgetragen werden, wird in bevorzugter Ausführung vor dem Verschweißen zusätzliches Material im Bereich der Schweißnaht aufgetragen. Der Bereich der Schweißnaht entspricht dabei im Wesentlichen dem Überlappungsbereich der beiden Enden auf das Transportband, kann aber auch je nach Schweißvorrichtung und Ausbildung der Enden des Transportbandes größer oder kleiner ausgeführt sein. Dieses zusätzliche Material verbindet sich durch den Schweißvorgang stoffschlüssig mit dem Transportband und bewirkt, dass die Tiefe der Senke verkleinert wird oder - bei genügend aufgetragenen Material - sich sogar eine Erhebung im Bereich der Schweißnaht ausbildet. Sollte sich eine Erhebung ausbilden, ist es möglich, die neue Nenndicke als die ursprüngliche Dicke des Transportbandes zu definieren, womit durch den Schleifprozess nur die Erhebung geschliffen werden muss. Dies reduziert die Schleifarbeit erheblich.

Für eine optimale Verbindung des zusätzlichen Materials und auch einer Optimierung der zugefügten Materialmenge sind in bevorzugter Ausführung mehrere Schweißvorgänge vorgesehen, wobei bei zumindest einem Schweißvorgang zusätzliches Material hinzugefügt wird. Durch diese zusätzlichen Schweißvorgänge kann die Senke Schritt für Schritt mit zusätzlichem Material gefüllt werden, bis die neue Nenndicke in einem für die weitere Verwendung akzeptablen Bereich liegt oder auch bis die Senke vollständig gefüllt ist und während dem Schleifprozess nur noch eine Erhebung abgetragen werden muss.

Zur weiteren Optimierung der zugefügten Materialmenge wird in besonders vorteilhafter Ausführung die Senke nach dem ersten Schweißvorgang in ihren räumlichen Abmessungen ausgemessen und anhand dieser Daten die optimale Menge des zugefügten Materials bestimmt. Ebenfalls möglich ist dabei die Bestimmung der optimalen Anzahl von weiteren Schweißvorgängen mit den jeweils zugefügten Materialmengen oder auch die Ausmessung der Senke nach jedem Schweißvorgang.

Um der Form der Senke gerecht zu werden, die im Randbereich flacher ausgeführt ist und in der Mitte, also im Bereich der Fügestelle, tiefer ausgeführt ist, wird in vorteilhafter Ausführung das zusätzliche Material in mehreren Lagen aufgetragen. Dadurch wird die zugeführte Materialmenge an die typischen Ausformungen der Senke angepasst und eine optimale Ausfüllung der Senke erreicht. Auch dies verringert die anschließende Schleifarbeit, weil die Erhebung gerade im Randbereich des Schweißbereiches verringert wird.

Zur Vermeidung eines komplizierten Aufziehens und Spannens des endlosen Transportbandes werden der Schweißprozess und insbesondere auch der Schleifprozess in bevorzugter Ausführung in der Druckmaschine vorgenommen. Dabei wird einer der vorliegenden Transportzylinder oder ein anderes Element, auf dem das Transportband aufliegt, in vorteilhafter Ausgestaltung als Referenzfläche beim Schleifen verwendet. Das Schleifgerät kann dann derart manuell oder automatisch eingestellt werden, dass es das Transportband auf die neue Nenndicke in Bezug zu der Auflagefläche, also in Bezug zur Oberfläche des Transportzylinders oder des weiteren Elements, schleift.

Die Schleifvorrichtung ist dabei in bevorzugter Ausgestaltung derart ausgebildet, dass sie quer zum Transportband bewegt werden kann und somit das Transportband über die gesamte Breite geschliffen werden kann. Die Schleifvorrichtung kann darüber hinaus ausgebildet sein, auch in Längsrichtung des Transportbandes zu schleifen, sodass die gesamte Breite der Senke abgedeckt werden kann. In alternativer oder zusätzlicher Ausführung ist es auch möglich, das Transportband relativ zur Schleifvorrichtung in Längsrichtung zu bewegen. Dadurch wird beispielsweise ein Schleifen des gesamten Bands auf eine neue Nenndicke ermöglicht, die kleiner als die ursprüngliche Dicke des Transportbandes ist.

Die mit der Erfindung erzielten Vorteile bestehen insbesondere darin, dass durch das Abschleifen des Transportbandes auf einen neuen Nennwert der Dicke oder einen Dickenausgleich im Bereich der Fügestelle sichergestellt wird, dass alle Exemplare, auch diejenigen, die im Bereich der Fügestellte bedruckt werden, den Qualitätsanforderungen genügen.

Ein Ausführungsbeispiel der Erfindung wird anhand einer Zeichnung näher erläutert. Darin zeigen:
Fig. 1 den Schweißvorgang der beiden Enden eines Transportbandes und das Dickenprofil des endlosen Transportbandes nach dem Schweißvorgang,
Fig. 2 den Schweißvorgang der beiden Enden eines Transportbandes unter Verwendung zusätzlichen Materials und das Dickenprofil des endlosen Transportbandes nach dem Schweißvorgang,
Fig. 3 verschiedene Möglichkeiten der Auftragung zusätzlichen Materials im Bereich der Fügekante,
Fig. 4 das Abschleifen des zusätzlichen Materials und das Dickenprofil des endlosen Transportbandes nach dem Schleifvorgang.

Gleiche Teile sind in allen Figuren mit denselben Bezugszeichen versehen.

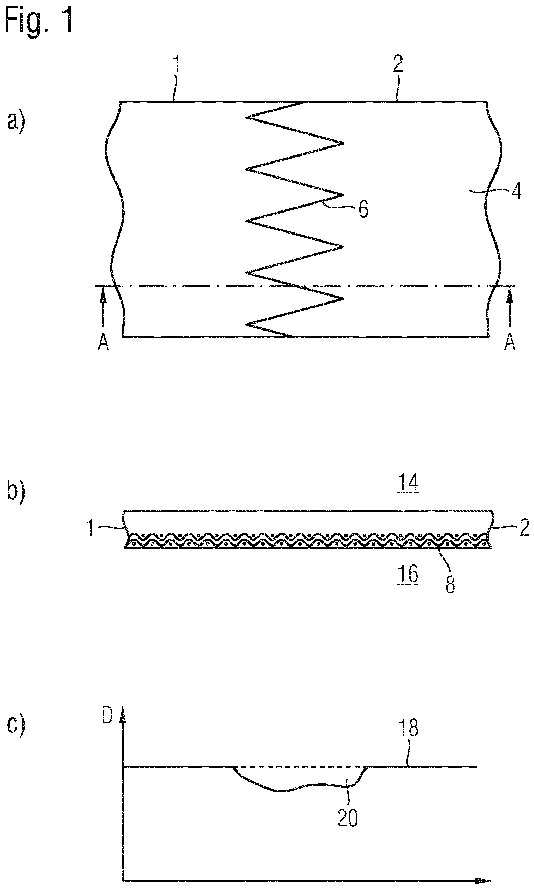

Im Ausführungsbeispiel nach Fig. 1 ist der Schweißvorgang ohne zusätzliche Materialbeigabe dargestellt. Die beiden Enden 1, 2 eines Transportbandes 4 sind keilzinkenförmig ausgeführt und greifen an der Nahtstelle 6 ineinander. In Fig. 1b ist ein Querschnitt durch das Transportband 4 im Bereich der Schweißnaht bzw. Nahtstelle 6 während des Schweißvorganges gezeigt. Im Querschnitt ist der Aufbau des Transportbandes 4 deutlicher sichtbar. Es besteht aus einer textilen Gewebelage 8 und einer Deckschicht 10, die mit einem Adhäsiv beschichtet wird. Der Schweißvorgang wird mittels einer Heißpresse 12 durchgeführt, welche eine obere 14 und eine untere Heizplatte 16 umfasst, mit denen Temperaturen von ca. 160 °C erreicht werden können. Durch die Heizplatten werden die beiden Enden 1, 2 des Transportbandes 4 stoffschlüssig miteinander verbunden. Wie das Dickenprofil 18 nach Fig. 1c zeigt, bildet sich durch den Schweißvorgang eine Senke 20 im Bereich der Nahtstelle 6.

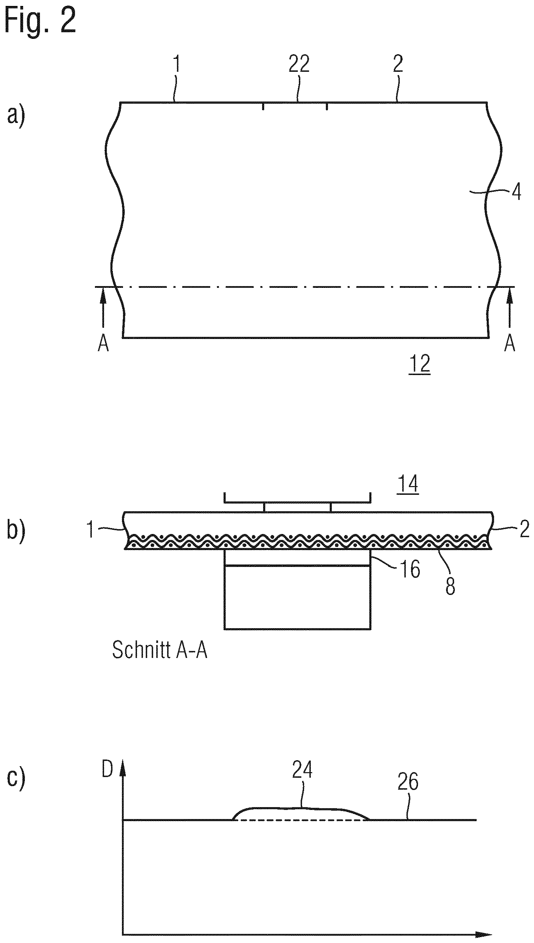

Im Unterschied zum Ausführungsbeispiel nach Fig. 1 wird im Ausführungsbeispiel nach Fig. 2 vordem Schweißen zusätzliches Material 22 in Form von Materialstreifen im Bereich der Nahtstelle 6 aufgelegt. Durch die Beigabe des zusätzlichen Materials 22 bildet sich nun keine Senke aus, sondern diese wird durch das zusätzliche Material 22 vollständig gefüllt und es entsteht dagegen eine kleine Erhebung 24, wie dem Dickenprofil 26 nach Fig. 2c zu entnehmen ist.

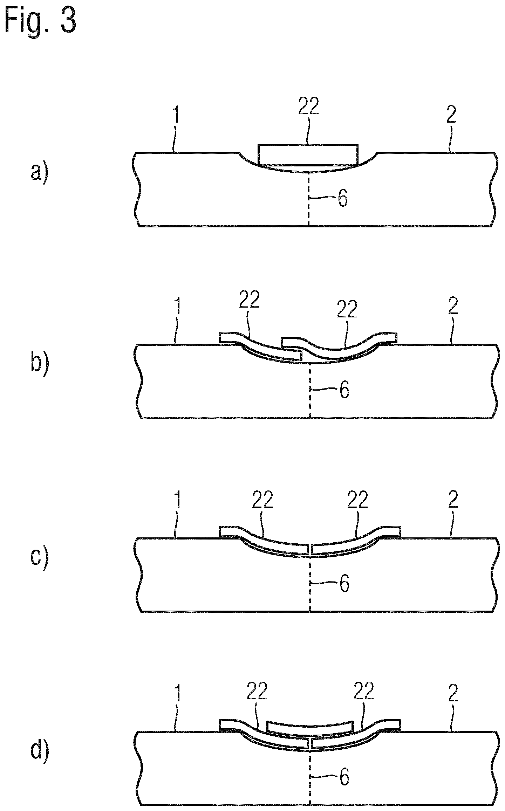

Die Beigabe des zusätzlichen Materials 22 kann dabei bereits vor dem ersten Schweißvorgang vorgenommen werden, es ist aber auch möglich, zunächst die Enden 1, 2 des Transportbandes 4 zu verschweißen und in zusätzlichen Schweißvorgängen die Senke mit zusätzlichem Material 22 zu füllen. Dabei ist es möglich, durch Ausmessen der Senke die optimale zusätzliche Materialmenge zu bestimmen. Wie in den Darstellungen der Fig. 3 entnehmbar ist, kann das zusätzliche Material 22 auch auf mehrere Arten aufgelegt werden. Einerseits ist es natürlich möglich, einen einzelnen Materialstreifen (Fig. 3a) zu verwenden, anderseits sind aber auch mehrere Materialstreifen denkbar, die überlappend (Fig. 3b), nebeneinander (Fig. 3c) oder in mehreren Lagen über- und nebeneinander (Fig. 3d) angeordnet werden können. Durch die geeignete Wahl der Anordnung des zusätzlichen Materials 22 kann die Senke 20 bestmöglich gefüllt werden, sodass die Erhebung 24 reduziert und somit auch die spätere Schleifarbeit reduziert werden kann.

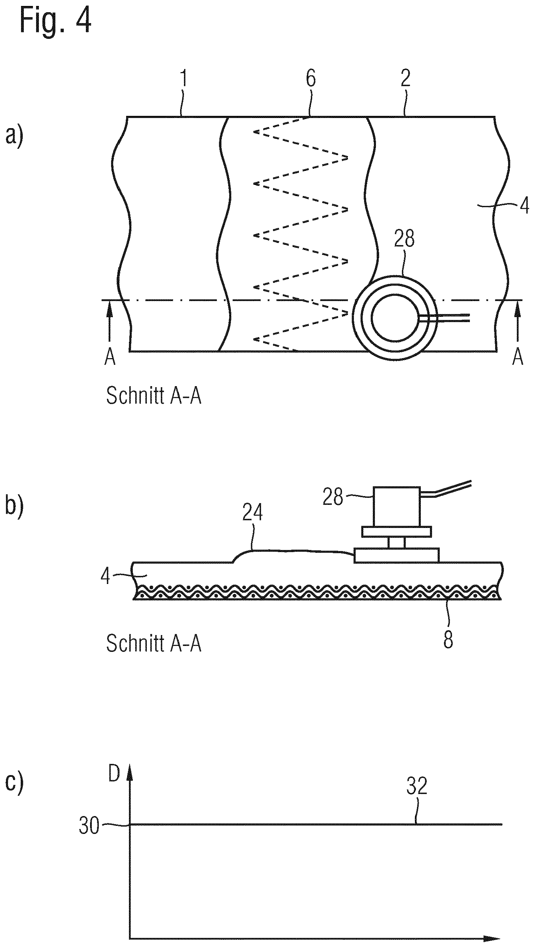

Der anschließende Schleifprozess ist in Fig. 4 dargestellt. Die Schleifvorrichtung 28 fährt quer zum Transportband 4 über die gesamte Breite des Transportbandes 4 und schleift das Transportband 4 auf eine Nenndicke 30, die kleiner oder gleich der minimalen Dicke des Transportbandes nach dem Schweißen ist. Im vorliegenden Fall entspricht die Nenndicke 30 der ursprünglichen Dicke des Transportbandes 4, sie kann aber auch im Falle einer übrig gebliebenen Senke 22 kleiner als die ursprüngliche Dicke des Transportbandes 4 sein. Als Referenzebene für die Bestimmung der aktuellen Dicke verwendet das Schleifgerät dabei die Auflagefläche des Transportbandes bzw. die Unterseite der Gewebelage 8. Für das Schleifen in Längsrichtung ist es möglich, dass das Transportband unter dem Schleifgerät in Längsrichtung bewegt wird und/oder auch, dass das Schleifgerät in Längsrichtung bewegbar ausgebildet ist. In beiden Fällen kann das Schleifgerät die im Ausführungsbeispiel nach Fig. 4 dargestellte Erhebung abtragen, sodass ein Transportband mit einer konstanten Dicke über die gesamte Länge und Breite entsteht, wie dem Dickenprofil 32 in Fig. 4c entnehmbar ist.

### Bezugszeichenliste

- 1: erstes Ende des Transportbands
- 2: zweites Ende des Transportbands
- 4: Transportband
- 6: Schweißnaht
- 8: Gewebelage
- 10: Deckschicht
- 12: Heißpresse
- 14: obere Heizplatte
- 16: untere Heizplatte
- 18: Dickenprofil
- 20: Senke
- 22: zusätzliches Material
- 24: Erhebung
- 26: Dickenprofil
- 28: Schleifvorrichtung
- 30: Nenndicke
- 32: Dickenprofil

## Patentansprüche

1. Verfahren zur Herstellung eines endlosen Transportbandes (4) zum Führen von Substraten während des Druckvorganges einer Druckmaschine, wobei die Enden eines Transportbandes (1, 2) verschweißt werden und wobei das Transportband (4) mittels einer Schleifvorrichtung (28) über die gesamte Breite geschliffen wird, **dadurch gekennzeichnet, dass** das Transportband (4) nach einem oder mehreren Schweißvorgängen auf eine Nenndicke (30) geschliffen wird, die kleiner als oder gleich der minimalen Dicke des Transportbandes (4) nach dem Schweißen ist.

2. Verfahren nach Anspruch 1, **dadurch gekennzeichnet, dass** vor dem Verschweißen zusätzliches Material (22) im Bereich der Schweißnaht (6) des Transportbandes (4) aufgetragen wird.

3. Verfahren nach Anspruch 1 oder 2, **dadurch gekennzeichnet, dass** mehrere Schweißvorgänge vor dem Schleifen vorgesehen sind und zumindest bei einem der Teil der Schweißvorgänge zusätzliches Material (22) im Bereich der Schweißnaht (6) des Transportbandes (4) aufgetragen wird.

4. Verfahren nach Anspruch 3, **dadurch gekennzeichnet, dass** die Menge des zusätzlichen Materials (22) für den weiteren Schweißvorgang durch Messung der Tiefe und der räumlichen Ausdehnung der Formabweichung des Transportbandes (4) im Bereich der Schweißnaht (6) des Transportbandes (4) bestimmt wird.

5. Verfahren nach einem der Ansprüche 2 bis 4, **dadurch gekennzeichnet, dass** das zusätzliche Material (22) mehrlagig aufgetragen wird.

6. Verfahren nach einem der Ansprüche 1 bis 5, **dadurch gekennzeichnet, dass** sich der Schleifvorgang auf den Bereich der Schweißnaht (6) des Transportbandes (4) beschränkt und dass die Nenndicke (30) des Transportbandes (4) der ursprünglichen Dicke des Transportbandes (4) entspricht.

7. Verfahren nach einem der Ansprüche 1 bis 6, **dadurch gekennzeichnet, dass** der Schleifprozess innerhalb der Druckmaschine vorgenommen wird.

8. Verfahren nach einem der Ansprüche 1 bis 7, **dadurch gekennzeichnet, dass** die Auflagefläche, auf der das Transportband (4) für den Schleifprozess aufliegt, als Referenzfläche beim Schleifen verwendet wird.

9. Verfahren nach einem der Ansprüche 1 bis 8, **dadurch gekennzeichnet, dass** während des Schleifprozesses die Schleifvorrichtung (28) quer zum Transportband (4) bewegt wird.

10. Verfahren nach einem der Ansprüche 1 bis 9, **dadurch gekennzeichnet, dass**, während des Schleifprozesses die Schleifvorrichtung (28) längs zum Transportband (4) bewegt wird.

11. Verfahren nach einem der Ansprüche 1 bis 10, **dadurch gekennzeichnet, dass**, während des Schleifprozesses das Transportband (4) relativ zur Schleifvorrichtung (28) in Längsrichtung bewegt wird.

## Claims

1. A method for producing an endless conveyor belt (4) for conducting substrates during the printing process of a printing press, wherein the ends of a conveyor belt (1, 2) are welded and wherein the conveyor belt (4) is ground over the entire width by means of a grinding device (28), **characterized in that** the conveyor belt (4) after one or more welding operations is ground to a nominal thickness (30) that is smaller than or equal to the minimal thickness of the conveyor belt (4) after the welding.

2. The method according to claim 1, **characterized in that** prior to the welding additional material (22) is applied in the region of the weld seam (6) of the conveyor belt (4).

3. The method according to claim 1 or 2, **characterized in that** a plurality of welding operations prior to the grinding are provided and at least with a part of the welding operations additional material (22) is applied in the region of the weld seam (6) of the conveyor belt (4).

4. The method according to claim 3, **characterized in that** the quantity of the additional material (22) for the further welding operation is determined by measuring the depth and the spatial extent of the shape deviation of the conveyor belt (4) in the region of the weld seam (6) of the conveyor belt (4).

5. The method according to any one of the claims 2 to 4, **characterized in that** the additional material (22) is applied in multiple layers.

6. The method according to any one of the claims 1 to 5, **characterized in that** the grinding process is restricted to the region of the weld seam (6) of the conveyor belt (4) and **in that** the nominal thickness (30) of the conveyor belt (4) corresponds to the original thickness of the conveyor belt (4).

7. The method according to any one of the claims 1 to 6, **characterized in that** the grinding process is carried out within the printing press.

8. The method according to any one of the claims 1 to 7, **characterized in that** the support surface, on which the conveyor belt (4) is supported for the grinding process, is used as reference surface during the grinding.

9. The method according to any one of the claims 1 to 8, **characterized in that** during the grinding process the grinding device (28) is moved transversely to the conveyor belt (4).

10. The method according to any one of the claims 1 to 9, **characterized in that**, during the grinding process, the grinding device (28) is moved longitudinally to the conveyor belt (4).

11. The method according to any one of the claims 1 to 10, **characterized in that**, during the grinding process, the conveyor belt (4) is moved relative to the grinding device (28) in longitudinal direction.

## Revendications

1. Procédé de fabrication d'une bande de transport sans fin (4) pour guider des substrats pendant le processus d'impression d'une machine d'impression, dans lequel les extrémités d'une bande de transport (1, 2) sont soudées et la bande de transport (4) est rectifiée au moyen d'un dispositif de rectification (28) sur toute sa largeur, **caractérisé en ce que** la bande de transport (4) après une ou plusieurs opérations de soudage, est rectifiée à une épaisseur nominale (30) qui est inférieure ou égale à l'épaisseur minimale de la bande de transport (4) après rectification.

2. Procédé selon la revendication 1, **caractérisé en ce que**, avant le soudage, un surcroît de matériau (22) est appliqué au niveau du cordon de soudure (6) de la bande de transport (4).

3. Procédé selon la revendication 1 ou 2, **caractérisé en ce que** plusieurs opérations de soudage sont prévues avant la rectification et qu'au moins pour une partie des opérations de soudage, un surcroît de matériau (22) est appliqué au niveau du cordon de soudure (6) de la bande de transport (4).

4. Procédé selon la revendication 3, **caractérisé en ce que** la quantité de matériau supplémentaire (22) pour l'autre opération de soudage est déterminée par mesure de la profondeur et de l'extension spatiale de l'écart de format de la bande de transport (4) au niveau du cordon de soudure (6) de la bande de transport (4).

5. Procédé selon une des revendications 2 à 4, **caractérisé en ce qu'**un surcroît de matériau (22) est appliqué en plusieurs couches.

6. Procédé selon une des revendications 1 à 5, **caractérisé en ce que** l'opération de rectification se limite à la zone du cordon de soudure (6) de la bande de transport (4) et que l'épaisseur nominale (30) de la bande de transport (4) équivaut à l'épaisseur originelle de la bande de transport (4).

7. Procédé selon une des revendications 1 à 6, **caractérisé en ce que** le processus de soudage est réalisé à l'intérieur de la machine d'impression.

8. Procédé selon une des revendications 1 à 7, **caractérisé en ce que** la surface d'appui sur laquelle la bande de transport (4) repose pour le processus de rectification est utilisée comme surface de référence lors de la rectification.

9. Procédé selon une des revendications 1 à 8, **caractérisé en ce que**, pendant le processus de rectification, le dispositif de rectification (28) est déplacé transversalement par rapport à la bande de transport (4).

10. Procédé selon une des revendications 1 à 9, **caractérisé en ce que**, pendant le processus de rectification, le dispositif de rectification (28) est déplacé longitudinalement par rapport à la bande de transport (4).

11. Procédé selon une des revendications 1 à 10, **caractérisé en ce que**, pendant le processus de rectification, la bande de transport (4) est déplacée dans le sens longitudinal par rapport au dispositif de rectification (28).
